# EUROPÄISCHE PATENTSCHRIFT

(11) **EP 2 638 615 B1**
(45) Veröffentlichungstag und Bekanntmachung des Hinweises auf die Patenterteilung: **26.02.2020**
(21) Anmeldenummer: 11754845.3
(22) Anmeldetag: 09.08.2011
(51) Int. Cl.: B60L 3/00, H02J 7/34, H02H 9/00

(54) **VERFAHREN UND SCHALTUNGSANORDNUNG ZUR AUFLADUNG EINES ZWISCHENKREISKONDENSATORS**
METHOD AND CIRCUIT ARRANGEMENT FOR CHARGING AN INTERMEDIATE CIRCUIT CAPACITOR
PROCÉDÉ ET CIRCUIT POUR CHARGER UN CONDENSATEUR DE CIRCUIT INTERMÉDIAIRE

(30) Priorität: 14.09.2010 DE 102010040728
(43) Veröffentlichungstag der Anmeldung: 18.09.2013
(73) Patentinhaber: Robert Bosch GmbH, 70442 Stuttgart (DE); Samsung SDI Co., Ltd., Yongin-si Gyeonggi-do 446-577 (KR)
(72) Erfinder: BUTZMANN, Stefan, 71717 Beilstein (DE)
(74) Vertreter: Bee, Joachim
(86) Internationale Anmeldenummer: PCT/EP2011/063668
(87) Internationale Veröffentlichungsnummer: WO 2012/034789

(56) Entgegenhaltungen:
- WO-A1-2004/023637
- WO-A2-2005/006466
- DE-A1- 19 903 427
- DE-A1-102004 018 261
- US-A- 5 576 609
- US-A- 5 973 942

## Beschreibung

Die vorliegende Erfindung betrifft ein Verfahren zur Aufladung eines Zwischenkreiskondensators sowie eine Schaltungsanordnung zur Realisierung des Verfahrens.

### Stand der Technik

Das Dokument WO 2005006466 offenbart eine Schaltungsanordnung mit einer Batterie, welche mit einer Stromquelle mit einem Zwischenkreiskondensator verbunden ist, wobei parallel zu der Stromquelle eine Einstellschaltung angeordnet ist, mit welcher der Strom zur Aufladung des Zwischenkreiskondensators so einstellbar ist, dass in der Stromquelle während des gesamten Aufladevorgangs eine konstante Verlustleistung erzeugt wird.

Das Dokument DE 10 2004 018261 A1 offenbart eine Schaltungsanordnung mit einer Batterie, welche mit einer Stromquelle mit einem Zwischenkreiskondensator verbunden ist, wobei parallel zu der Stromquelle eine Einstellschaltung angeordnet ist, mit welcher der Strom zur Aufladung des Zwischenkreiskondensators so einstellbar ist, dass die Stromquelle auf einer konstanten Temperatur gehalten wird.

Die zukünftige Entwicklung von Batteriesystemen sowohl für stationäre Anwendungen wie Windkraftanlagen als auch für mobile Anwendungen wie in der Kraftfahrzeugtechnik geht hin zu neuen Batteriesystemen, an die sehr hohe Anforderungen bezüglich der Zuverlässigkeit gestellt werden.

Hintergrund für diese Anforderungen ist, dass ein Ausfall der Batterie zu einem Ausfall des Gesamtsystems führen kann. So kann beispielsweise bei einem Elektrofahrzeug ein Ausfall der Traktionsbatterie zu einem so genannten "Liegenbleiber" führen.

Bei Windkraftanlagen kann ein Ausfall der Batterie sogar zu einem sicherheitsrelevanten Problem führen, da hier beispielsweise Batterien eingesetzt werden, um bei starkem Wind die Anlage durch eine Rotorblattverstellung vor unzulässigen Betriebszuständen zu schützen.

Um die geforderten Leistungs- und Energiedaten mit dem Batteriesystem zu erzielen, werden einzelne Batteriezellen in Serie und teilweise zusätzlich parallel geschaltet.

In Hybrid- oder Elektrofahrzeugen wird typischerweise die Batterie mit zwei Hauptschützen mit dem Fahrzeugantrieb verbunden, wenn dieses betrieben werden soll.

Im Fahrzeug gibt es zum Abpuffern von Spannungs- und Stromspitzen zusätzlich einen so genannten Zwischenkreiskondensator.

Dieser Zwischenkreiskondensator verbietet allerdings das direkte Einschalten der beiden Hauptschütze, da in diesem Fall ein extrem hoher Strom durch die Schütze in den Zwischenkreiskondensator fließen würde und diesen zerstören könnte.

Aus diesem Grund wird gemäß dem bekannten Stand der Technik eine so genannte Vorladeeinheit in der Beschaltung der Batterie verwendet, die den Zwischenkreiskondensator zunächst mit einem limitierten Strom auflädt und erst nach Aufladung des Zwischenkreiskondensators werden dann die beiden Hauptschütze zugeschaltet.

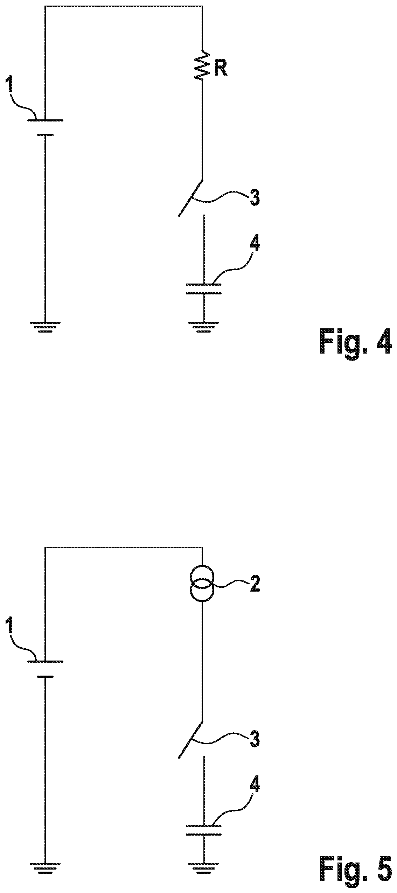

Der bekannte Stand der Technik ist in den Figuren 4 und 5 dargestellt.

Figur 4 zeigt eine typische Schaltung zur Aufladung des Zwischenkreiskondensators über einen Vorladewiderstand R. Hier wird ein so genanntes Vorladerelais eingeschaltet und der Zwischenkreiskondensator dann über den Vorladewiderstand R aufgeladen. Nachdem die gewünschte Zwischenkreisspannung erreicht ist, werden die beiden Hauptschütze eingeschaltet.

Nachteil dieser Lösung ist, dass zu Beginn der Aufladung ein hoher Strom durch die Vorladeeinheit fließt, welcher exponentiell über der Zeit abnimmt und somit die Zeit bis zum Schließen der Hauptschütze verlängert.

Zur Verkürzung der Einschaltzeit muss der Widerstandswert kleiner gewählt werden, was unmittelbar höhere Verlustleistungen im Widerstand zur Folge hat und somit die Verwendung eines volumen- und gewichtsmäßig größeren sowie teureren Widerstandes bedingt.

Aus diesem Grund wird häufig eine Stromquelle, wie in Figur 5 dargestellt, eingesetzt. Eine Stromquelle mit einem konstanten Strom führt zu einem konstanten Gradienten der Zwischenkreisspannung während des Aufladevorgangs.

Nachteilig ist allerdings hierbei, dass über der Stromquelle zu Beginn, also bei noch entladenem Zwischenkreiskondensator, eine hohe Spannung anliegt, was zu einer hohen Verlustleistung führt.

Da der Aufladevorgang typischerweise einige 100 ms dauert, müssen die Leistungsbauelemente in der Stromquelle auf diese hohe Verlustleistung ausgelegt werden. Diese Dimensionierung wird jedoch gegen Ende des Aufladevorgangs nicht mehr ausgenutzt, hier könnte dann ein höherer Strom fließen.

Aus der US 5,576,609 ist eine Schaltung zur Aufladung von Batterien mit einem Steuersystem bekannt, durch welches der Strom variiert wird, um eine konstante Verlustleistung zu gewährleisten.

Wesentliche Elemente des Steuersystems des Ladegerätes sind Stromsensor, Spannungssensor und ein mit den Sensoren gekoppelter Verstärker.

In der DE 102006050529 A1 wird eine Schaltungsanordnung zur kombinierten Isolations- und Schützüberwachung der Stromversorgung eines Elektroantriebes beschrieben. Es sind zwei Spannungsmesseinrichtungen vorgesehen zum Messen eines Spannungshubs. Die weiterhin angeordnete Leistungselektronik enthält einen Zwischenkreiskondensator, welcher strombegrenzt geladen wird.

### Offenbarung der Erfindung

Die Erfindung betrifft ein Verfahren gemäss Anspruch 1 und ein Schaltungsanordnung gemäss Anspruch 3. Erfindungsgemäß wird ein Verfahren beschrieben, welches eine Stromquelle zur Aufladung eines Zwischenkreiskondensators in einer Vorladeeinheit vorsieht, wobei die Stromquelle nicht einen konstanten Strom liefert. Es wird die Spannung über der Stromquelle erfasst und der Strom so eingestellt, dass die Stromquelle während des gesamten Aufladevorgangs mit einer konstanten Verlustleistung arbeitet.

Die erfindungsgemäße Schaltungsanordnung weist eine parallel zu der Stromquelle angeordnete Einstellschaltung auf, mit welcher der Strom so einstellbar ist, dass in der Stromquelle während des gesamten Aufladevorgangs eine konstante Verlustleistung erzeugt wird.

### Vorteile der Erfindung

Das erfindungsgemäße Verfahren hat den Vorteil, dass die Dauer des Vorladevorgangs verkürzt wird, indem zur Aufladung eines Zwischenkreiskondensators in einer Vorladeeinheit die Aufladung des Zwischenkreiskondensators über eine Stromquelle erfolgt, deren Strom derart eingestellt wird, dass in der Stromquelle während des gesamten Aufladevorgangs eine konstante Verlustleistung erzeugt wird.

Weiter ermöglicht das erfindungsgemäße Verfahren sehr vorteilhaft, dass die Spannung über der Stromquelle während des Aufladevorgangs erfasst und der von der Stromquelle gelieferte Strom geregelt wird.

Ein weiterer Vorteil der Erfindung besteht in dem kostengünstigen und zuverlässigen Aufbau der Schaltungsanordnung, indem parallel zu der Stromquelle eine Einstellschaltung angeordnet ist, mit welcher der Strom zur Aufladung des Zwischenkreiskondensators so einstellbar ist, dass in der Stromquelle während des gesamten Aufladevorgangs eine konstante Verlustleistung erzeugt wird.

Gemäß einer bevorzugten Ausführungsform der Erfindung ist vorgesehen, dass die konstante Verlustleistung durch eine Zenerdiode in Kombination mit einem Widerstand eingestellt wird.

In einer besonderen Ausführungsform der Erfindung ist vorgesehen, dass die Einstellschaltung Transistoren aufweist, welche als Dividierschaltung miteinander verbunden sind.

Vorteilhafte Weiterbildungen der Erfindung sind in den Unteransprüchen angegeben und in der Beschreibung beschrieben.

### Zeichnungen

Ausführungsbeispiele der Erfindung werden anhand der Zeichnungen und der nachfolgenden Beschreibung näher erläutert. Es zeigen:
Figur 1 eine Prinzipdarstellung der erfindungsgemäßen Stromquelle mit konstanter Verlustleistung in Abhängigkeit der Zwischenkreisspannung,
Figur 2 eine detaillierte Schaltungsanordnung zur Realisierung der in Figur 1 dargestellten Prinzipdarstellung,
Figur 3 Simulationsergebnisse zur Aufladung eines Zwischenkreiskondensators,
Figur 4 ein Prinzipschaltbild einer Vorladeeinheit zum Aufladen eines Zwischenkreiskondensators aus einem Batteriesystem gemäß dem Stand der Technik, und
Figur 5 ein Prinzipschaltbild zur Aufladung eines Zwischenkreiskondensators mit einer Konstantstromquelle gemäß dem Stand der Technik.

### Ausführungsformen der Erfindung

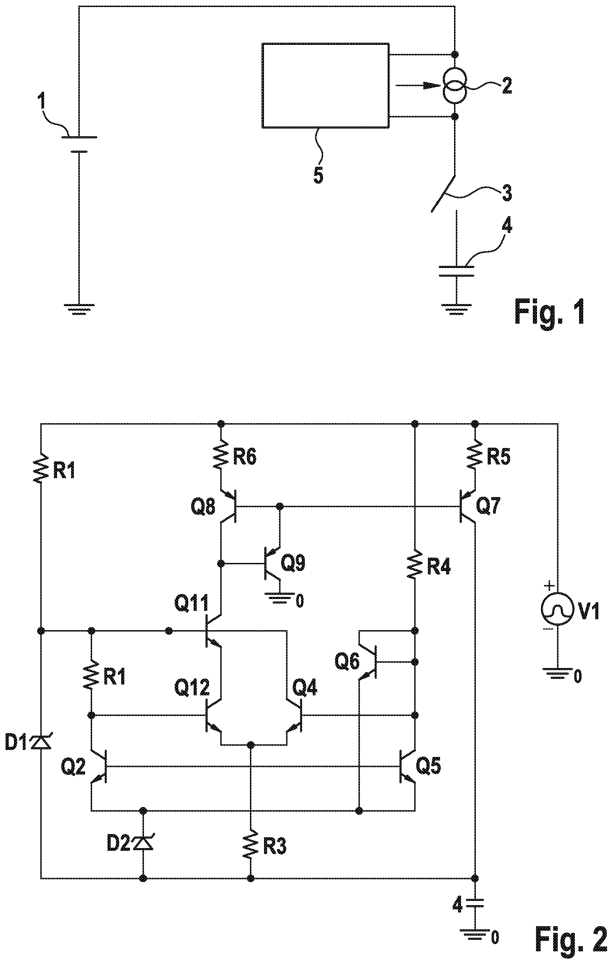

In der Figur 1 ist das Grundprinzip der erfindungsgemäßen Lösung gezeigt. Eine Batterie 1, im vorliegenden Ausführungsbeispiel eine Lithium-Ionen-Batterie, ist mit einer Stromquelle 2 verbunden. Gemäß der Erfindung wird die Spannung über der Stromquelle 2 erfasst und der Strom so eingestellt, dass in der Stromquelle 2 während des gesamten Aufladevorgangs eine konstante Verlustleistung erzeugt wird.

Die Stromquelle 2 ist über einen Schalter 3 mit dem Zwischenkreiskondensator 4 verbunden. Parallel zu der Stromquelle 2 ist eine Einstellschaltung 5 angeordnet, mit welcher der Strom zur Aufladung des Zwischenkreiskondensators 4 so einstellbar ist, dass in der Stromquelle 2 während des gesamten Aufladevorgangs die konstante Verlustleistung erzeugt wird.

Figur 2 zeigt eine mögliche Ausführungsform der Erfindung. Hierbei arbeiten die Transistoren Q2, Q12, Q4, Q5 und Q6 als Dividierschaltung. Die konstante Verlustleistung wird als Sollverlustleistung durch die Zenerdiode D1 und den Widerstand R2 eingestellt. Die Spannungsdifferenz zwischen Batterie- und Zwischenkreiskondensatorspannung wird über den Widerstand R4 erfasst. Am Kollektor von Transistor Q11 fließt dann ein Strom, welcher dem Sollstrom der Stromquelle 2 proportional ist. Die eigentliche Stromquelle 2 muss dann nur noch über einen Stromspiegel mit einem entsprechenden Stromverhältnis realisiert werden.

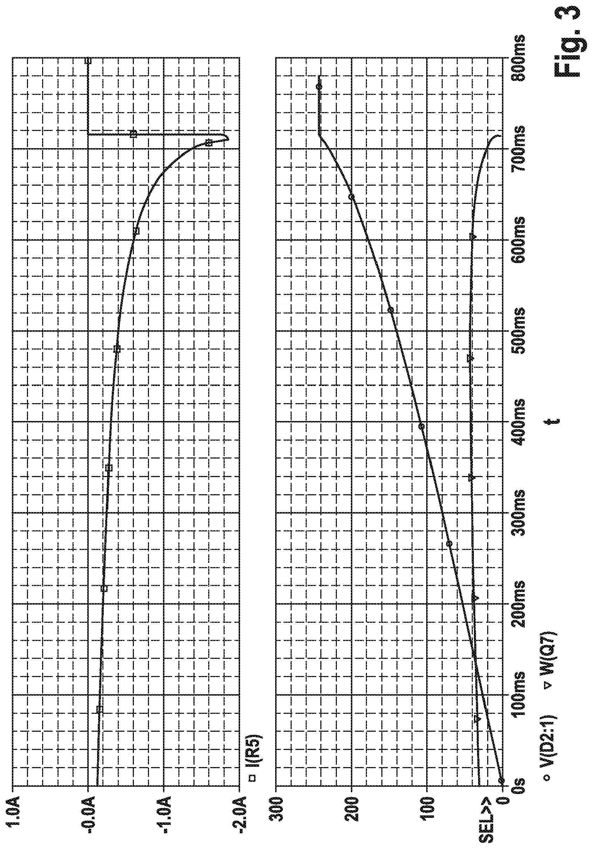

Figur 3 zeigt die Simulationsergebnisse für die in Figur 2 gezeigte Schaltungsanordnung zur Aufladung eines Zwischenkreiskondensators 4 auf eine Spannung von U = 250V. Die Linie in dem oberen Diagramm mit Quadraten ist der Strom, die Linie in dem unteren Diagramm mit den Kreisen die Spannung und die Linie mit den Dreiecken die Verlustleistung im Transistor Q7.

Es ist zu erkennen, dass der Strom mit steigender Spannung über dem Zwischenkreiskondensator 4 bei abnehmender Spannung über der Stromquelle 2 ansteigt. Erfindungsgemäß steigt damit die Spannung über dem Zwischenkreiskondensator 4 nicht nur linear an, sondern der Gradient des Anstiegs nimmt mit zunehmender Zwischenkreisspannung ebenfalls zu, so dass die Dauer des Vorladevorgangs verkürzt wird.

Die Strich-Punkt-Linie zeigt die Verlustleistung im Transistor Q7, die wie gewünscht während des gesamten Aufladevorgangs näherungsweise konstant bleibt.

## Patentansprüche

1. Verfahren zur Aufladung eines Zwischenkreiskondensators in einer Vorladeeinheit, wobei die Aufladung des Zwischenkreiskondensators (4) über eine Stromquelle (2) erfolgt, deren Strom derart eingestellt wird, dass in der Stromquelle (2) während des gesamten Aufladevorgangs eine konstante Verlustleistung erzeugt wird, **gekennzeichnet dadurch, dass** die konstante Verlustleistung durch eine Zenerdiode in Kombination mit einem Widerstand eingestellt wird, wobei die Stromquelle (2) über einen Stromspiegel mit einem entsprechenden Stromverhältnis realisiert wird.

2. Verfahren gemäß Anspruch 1, wobei die Spannung über der Stromquelle (2) während des Aufladevorgangs erfasst und der von der Stromquelle (2) gelieferte Strom geregelt wird.

3. Schaltungsanordnung mit einer Batterie (1), welche mit einer Stromquelle (2) und diese über einen Schalter (3) mit einem Zwischenkreiskondensator (4) verbunden ist, wobei parallel zu der Stromquelle (2) eine Einstellschaltung (5) angeordnet ist, mit welcher der Strom zur Aufladung des Zwischenkreiskondensators (4) so einstellbar ist, dass in der Stromquelle (2) während des gesamten Aufladevorgangs eine konstante Verlustleistung erzeugt wird, **gekennzeichnet dadurch, dass** die Einstellschaltung (5) Transistoren (Q2, Q12, Q4, Q5 und Q6) aufweist, welche als Dividierschaltung miteinander verbunden sind, wobei die Einstellung der konstanten Verlustleistung durch eine Zenerdiode (D1) in Zusammenschaltung mit einem Widerstand (R2) erfolgt.

4. Schaltungsanordnung nach Anspruch 3, wobei die Spannungsdifferenz zwischen Batteriespannung und Zwischenkreiskondensatorspannung über einen Widerstand (R4) erfasst wird.

5. Ein Kraftfahrzeug mit einem elektrischen Antriebsmotor zum Antreiben des Kraftfahrzeuges und einer mit dem elektrischen Antriebsmotor verbundenen Schaltungsanordnung gemäß Anspruch 3.

6. Eine Windkraftanlage mit einem Batteriesystem und einer mit dem Batteriesystem verbundenen Schaltungsanordnung gemäß Anspruch 3.

## Claims

1. Method for charging an intermediate-circuit capacitor in a precharging unit, wherein
the intermediate-circuit capacitor (4) is charged via a current source (2), the current of which is adjusted in such a way that a constant power loss is produced in the current source (2) during the entire charging operation,
**characterized in that**
the constant power loss is adjusted by means of a Zener diode in combination with a resistor, wherein the current source (2) is realized by means of a current mirror with an appropriate current ratio.

2. Method according to Claim 1, wherein the voltage across the current source (2) during the charging operation is acquired and the current supplied from the current source (2) is regulated.

3. Circuit arrangement having a battery (1), which is connected to a current source (2), said current source being connected to an intermediate-circuit capacitor (4) via a switch (3), wherein an adjusting circuit (5) is arranged in parallel with the current source (2), with which adjusting circuit the current for charging the intermediate-circuit capacitor (4) can be adjusted in such a way that a constant power loss is produced in the current source (2) during the entire charging operation, **characterized in that**
the adjusting circuit (5) has transistors (Q2, Q12, Q4, Q5 and Q6), which are connected to one another as a divider circuit, wherein the constant power loss is adjusted by means of a Zener diode (D1) interconnected with a resistor (R2).

4. Circuit arrangement according to Claim 3, wherein the voltage difference between the battery voltage and the intermediate-circuit capacitor voltage is acquired by means of a resistor (R4).

5. Motor vehicle having an electric drive motor for driving the motor vehicle and a circuit arrangement according to Claim 3 connected to said electric drive motor.

6. Wind power installation having a battery system and a circuit arrangement according to Claim 3 connected to said battery system.

## Revendications

1. Procédé pour charger un condensateur de circuit intermédiaire dans une unité de précharge, la charge du condensateur de circuit intermédiaire (4) s'effectuant par le biais d'une source de courant (2) dont le courant est réglé de telle sorte qu'une puissance dissipée constante est générée dans la source de courant (2) pendant tout le processus de charge,
**caractérisé en ce que**
la puissance dissipée constante est réglée par une diode Zener en combinaison avec une résistance, la source de courant (2) étant réalisée par le biais d'un miroir de courant avec un rapport de courant correspondant.

2. Procédé selon la revendication 1, la tension aux bornes de la source de courant (2) étant détectée pendant le processus de charge et le courant délivré par la source de courant (2) étant régulé.

3. Arrangement de circuit comprenant une batterie (1) qui est reliée à une source de courant (2), laquelle est reliée à un condensateur de circuit intermédiaire (4) par le biais d'un commutateur (3), un circuit de réglage (5) étant monté en parallèle de la source de courant (2), avec lequel le courant destiné à charger le condensateur de circuit intermédiaire (4) peut être réglé de telle sorte qu'une puissance dissipée constante est générée dans la source de courant (2) pendant tout le processus de charge,
**caractérisé en ce que**
le circuit de réglage (5) possède des transistors (Q2, Q12, Q4, Q5 et Q6) qui sont reliés les uns aux autres sous la forme d'un circuit diviseur, le réglage de la puissance dissipée constante s'effectuant par une diode Zener (D1) en interconnexion avec une résistance (R2).

4. Arrangement de circuit selon la revendication 3, la différence de tension entre la tension de batterie et la tension du condensateur de circuit intermédiaire étant détectée par le biais d'une résistance (R4).

5. Véhicule automobile comprenant un moteur de propulsion électrique destiné à propulser le véhicule automobile et un arrangement de circuit selon la revendication 3 relié au moteur de propulsion électrique.

6. Aérogénérateur comprenant un système de batterie et un arrangement de circuit selon la revendication 3 relié au système de batterie.
